# DEMANDE DE BREVET EUROPEEN

(11) **EP 4 113 767 A1**
(43) Date de publication de la demande: **04.01.2023**
(21) Numéro de dépôt: 22178206.3
(22) Date de dépôt: 09.06.2022
(51) Int. Cl.: H02G 5/06

(54) **DISPOSITIF DE LIAISON ELECTRIQUE ENTRE CABLES COMPRENANT UNE PLAQUE A CANAUX ISOLES ELECTRIQUEMENT ENTOURANT DES JEUX DE BARRE**

(30) Priorité: 28.06.2021 FR 2106926
(71) Demandeur: AIRBUS OPERATIONS (S.A.S.), 31060 Toulouse (FR)
(72) Inventeur: DUBARRY, Yann, 31060 TOULOUSE Cedex 9 (FR); ERROUI, Najoua, 31060 TOULOUSE Cedex 9 (FR)
(74) Mandataire: Sarraméa, Claude

(57) **Abrégé**

La présente invention se rapporte à un dispositif liaison électrique (12) entre câbles (4) au niveau de laquelle s'opère un changement de direction. Il comprend au moins deux jeux (14) de barre ainsi qu'une plaque (16) présentant des canaux (22) intérieurs indépendants dans lesquels se trouvent lesdits jeux (14) de barre, chaque canal étant isolé électriquement des autres canaux, lesdits jeux (14) de barre assurant une conduction électrique d'une extrémité débouchante (24) d'un canal à l'autre extrémité (26). Les câbles (4) sont fixés au niveau de ces extrémités débouchantes (24, 26) et ne subissent ainsi aucune déformation, le changement de direction se faisant à l'intérieur de la plaque à l'aide des jeux (14) de barre.

## Description

La présente invention concerne le domaine de la distribution électrique entre équipements plus particulièrement d'un aéronef. Elle s'applique en particulier aux installations électriques à courant continu haute tension (en anglais High Voltage Direct Current - HVDC).

Les équipements électriques d'un aéronef doivent être alimentés et pour ce faire comportent des harnais de câbles de puissance électrique. Du fait de l'environnement contraint et limité de l'aéronef, des changements de direction sont souvent nécessaires dans une zone d'espace restreint. Or, il est nécessaire de respecter des distances d'isolement électriques et ces distances peuvent se révéler importantes lorsque l'on considère des harnais de nombreux câbles électriques à gérer dans un espace limité ainsi que la quantité de connexions à prendre en charge.

La demande FR3073337 déposée par Airbus Opérations SAS décrit un élément modulaire comprenant un jeu de barre ou barre omnibus (en anglais busbar) pouvant être juxtaposé à un autre élément permettant la distribution entre équipements électriques par jeux de barre juxtaposés. Comme le montrent les figures dudit brevet, les changements de direction ne sont pas prises en considération. Les jeux de barre sont alignés le long de la direction longitudinale de l'aéronef ou de la voilure ou autre.

La présente invention vise à apporter une solution alternative avantageuse aux torsions de câbles de puissance dans un contexte de changement de direction.

A cet effet, la présente invention concerne un dispositif de liaison de liaison électrique entre câbles comprenant au moins deux jeux de barres, caractérisé en ce qu'il comprend une plaque présentant au moins deux canaux intérieurs indépendants dans lesquels se trouvent lesdits jeux de barre, chaque canal étant isolé électriquement des autres canaux, lesdits jeux de barre assurant une conduction électrique d'une extrémité débouchante d'un canal à l'autre extrémité.

Les câbles sont fixés au niveau de ces extrémités débouchantes et ne subissent ainsi aucune déformation, le changement de direction se faisant à l'intérieur de la plaque à l'aide des jeux de barre.

L'invention prévoit au moins l'une des caractéristiques optionnelles suivantes, prises isolément ou en combinaison.

Les jeux de barre sont isolés électriquement d'un canal à l'autre.

Les parois des canaux sont constituées d'un matériau isolant électriquement.

Les extrémités d'entrée et de sortie d'un même canal sont décalées transversalement.

La plaque est au moins partiellement rigide.

Les canaux comprennent un ou plusieurs coudes divisant les canaux en plusieurs branches s'étendant selon des directions différentes.

Les canaux présentent d'un canal à l'autre des branches longitudinales parallèles.

Les canaux présentent d'un canal à l'autre des branches au moins partiellement contiguës.

Les canaux présentent d'un canal à l'autre des branches transversales parallèles.

Les canaux dits extrémaux se trouvant au plus proche de bords de la plaque présentent deux branches et une forme de L et les autres canaux dits centraux se trouvant entre les canaux extrémaux présentent trois branches dont la branche centrale est parallèle aux branches centrales des autres canaux centraux.

La plaque est parallélépipédique de section rectangulaire.

Les canaux sont parallélépipédiques de section rectangulaire légèrement supérieure à celle du jeu de barres associé de manière que le jeu de barre soit enveloppé par le canal.

L'une des parois d'un canal peut être au moins partiellement mitoyenne avec une paroi d'un autre canal.

La présente invention se rapporte également à un ensemble électrique comprenant au moins quatre câbles et un dispositif de liaison présentant l'une ou plusieurs des caractéristiques précédentes, l'extrémité de câbles dits entrants dans le dispositif de liaison devant être liés à l'extrémité de câbles dits sortants ne se trouvant pas dans le même alignement, caractérisé en ce que l'extrémité des câbles entrants est fixée respectivement au niveau d'une extrémité débouchante d'un canal se trouvant au niveau d'un bord de la plaque et l'extrémité des câbles sortants est fixée respectivement au niveau d'une extrémité débouchante d'un canal se trouvant au niveau d'un autre bord de la plaque, les câbles à associer étant liés par un même canal.

Selon une caractéristique optionnelle, les extrémités des câbles sont serties à l'intérieur des extrémités débouchantes des canaux.

La présente invention se rapporte à toute structure telle qu'un aéronef munie d'équipements électriques, ainsi que d'ensembles électriques permettant de les lier comportant une ou plusieurs des caractéristiques optionnelles présentées précédemment, lesdits dispositifs de liaison permettant d'assurer des changements de direction entre les câbles permettant la connexion entre les équipements.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective simplifiée et partielle d'un tronçon d'aéronef dans lequel une partie des équipements et câbles les reliant est mis en évidence ;
[Fig. 2] est une vue en perspective d'un ensemble de câbles associés à un dispositif de liaison selon la présente invention dont l'espace intérieur est visible par transparence ;
[Fig. 3] est une vue en perspective d'un ensemble de câbles associés à un dispositif de liaison selon une autre forme de réalisation de celle de la figure 2 et dont l'espace intérieur est visible par transparence ;
[Fig. 4] est une vue en perspective d'un ensemble de câbles associés à un dispositif de liaison selon une autre forme de réalisation de celle des figures 2 ou 3 et dont l'espace intérieur est visible par transparence.

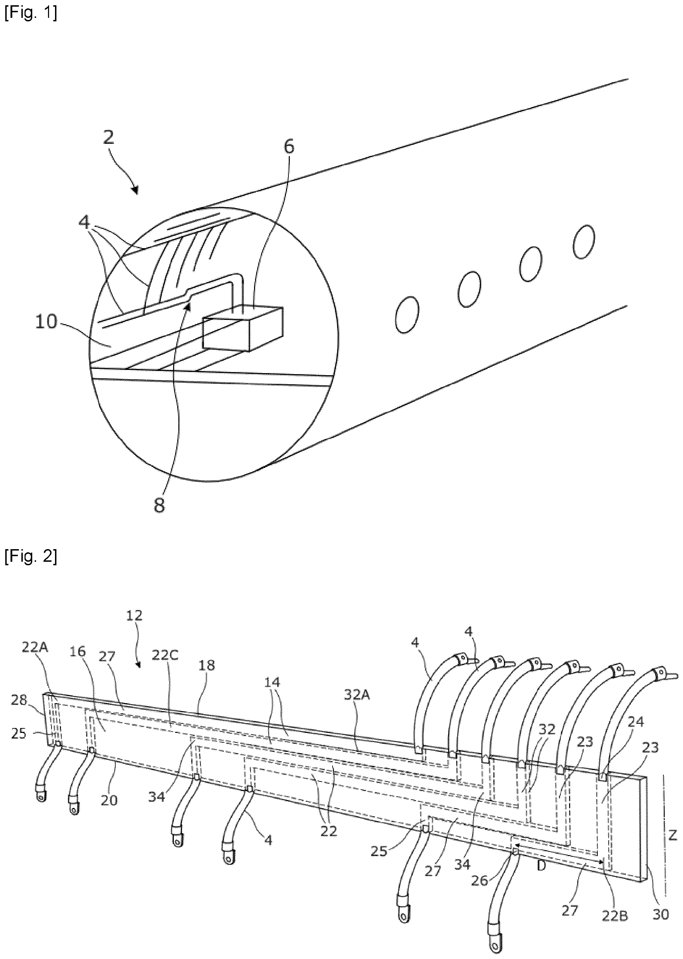

Comme représenté sur la figure 1, dans un aéronef 2 s'étendent de très nombreuses et importantes longueurs de câbles 4 pour assurer la distribution électrique entre équipements 6 et notamment à courant continu haute tension. Compte-tenu de l'espace confiné restreint dans lequel les câbles 4 doivent être installés, des changements 8 de direction sont nécessaires dans leur parcours le long du fuselage 10 ou ailleurs. Or comme indiqué plus haut, il est impératif de respecter des distances d'isolation électrique entre câbles ce qui ne facilite pas leur mise en place. La présente invention a pour but de permettre de respecter les distances d'isolation tout en limitant l'espace alloué au changement de direction et d'éviter les torsions de câbles 4 que requiert un changement 8 de direction qui les détériore avec le temps.

Comme illustré sur les figures 2 à 4 qui représentent trois formes de réalisation différentes, la présente invention se rapporte à un dispositif 12 de liaison électrique entre câbles 4 au niveau de laquelle s'opère un changement de direction. Le dispositif de liaison 12 comprend au moins deux jeux 14 de barre. Comme vu plus haut, un jeu de barre est aussi appelé barre omnibus ou en anglais busbar et est un terme communément accepté pour désigner des conducteurs électriques sous forme de barres plates ou de tubes dont les propriétés ne seront pas rappelées ici. Le dispositif de liaison 12 comporte également une plaque 16 présentant au moins deux canaux 22 intérieurs indépendants dans lesquels se trouvent lesdits jeux 14 de barre, chaque canal étant isolé électriquement des autres canaux. De cette manière, le dispositif 12 de liaison offre à la fois la possibilité de combiner câbles et jeux de barre pour permettre tout type de changement de direction tout en assurant la protection des câbles dans un dispositif de routage électrique compact et non encombrant. Du fait d'être intégrés à une plaque, les axes longitudinaux des canaux se trouvent dans un même plan ou des plans parallèles les uns aux autres. Le (ou les) jeux 14 de barre associés à un canal 22 assure(nt) une conduction électrique de l'extrémité 24 d'entrée à l'extrémité 26 de sortie dudit canal 22. Les termes « entrant » et « sortant » ont pour seule finalité de distinguer les deux extrémités d'un canal 22, des câbles associés par ledit canal ou des extrémités desdits câbles. Selon une forme de réalisation, les jeux 14 de barre peuvent être renforcés pour pouvoir être utilisés comme support et venir localement attachés la plaque sur la structure de l'aéronef 2. Selon une autre forme de réalisation, la plaque 16 peut être utilisée seule ou en combinaison avec les jeux pour la fixation à la structure de l'aéronef.

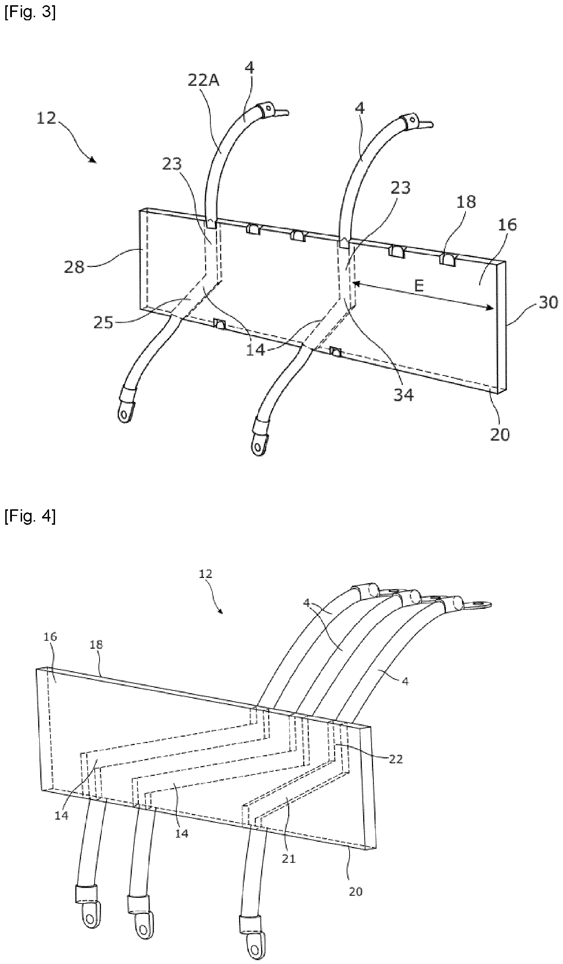

Chaque canal 22 débouche à chacune de ses extrémités 24, 26 au niveau d'un bord respectivement 18, 20 de la plaque 16. Chaque canal comprend une branche 21 (forme de réalisation de la figure 4) ou plusieurs branches 23, 25, 27 (formes de réalisation des figures 2 ou 3). Chaque canal 22 a une extrémité 24 débouchant au niveau de l'un des bords 18, dite extrémité d'entrée et une autre extrémité 26 débouchant au niveau d'un autre bord 20, dite extrémité de sortie, la branche comportant l'extrémité d'entrée étant appelée branche 21, 23, 27 d'entrée et celle comportant l'extrémité de sortie étant appelée branche 21, 25, 27 de sortie. Si le canal comprend une seule branche 21 (figure 4), la branche d'entrée est identique à la branche de sortie.

Dans la suite de la description, les termes « transversal » et « longitudinal » définissent deux directions perpendiculaires l'une par rapport à l'autre, la direction transversale désignant la direction Z de traversée au plus court du courant d'un bord 18 de la plaque 16 à un autre bord 20 sans changement de direction. Dans le cas par exemple d'une plaque de forme parallélépipédique rectangulaire, la direction transversale Z correspond comme montré sur la figure 2 à la direction parallèle aux bords 28, 30 les plus courts. Dans les formes illustrées sur les figures 2 à 4, la plaque n'est pas mise en place dans un environnement électrique donné : ainsi les câbles ne s'étendent pas dans une direction donnée.

Selon la présente invention, l'extrémité d'entrée 24 et l'extrémité de sortie 26 d'un canal 22 sont décalés transversalement. Le terme « décalé » signifie que l'extrémité 26 de sortie ne se trouve pas dans l'axe de direction Z transversale passant par l'extrémité 24 débouchante d'entrée. Il existe un décalage D : sur la figure 2, si l'on considère le canal le plus proche du bord 30, le décalage correspond à la longueur de la branche de sortie 27. L'extrémité 26 de sortie ne se trouve pas en vis-à-vis de l'extrémité 24 d'entrée et ce pour permettre justement un changement de direction. Le dispositif de liaison 12 permet ainsi une connexion électrique entre deux câbles 4 décalés transversalement d'une grande distance.

La plaque 16 comprend des canaux 22 intérieurs dont les parois 32 en matériau isolant permettent d'isoler électriquement chaque canal des autres canaux. D'autres moyens permettant d'isoler un canal par rapport à un autre de type connu peuvent être possibles. A l'intérieur de chaque canal 22 se trouve un jeu 14 de barre ou plusieurs jeux de barre contigus adjoints l'un à l'autre pour former une ligne électrique continue tout au long du canal. Du fait d'entourer le ou les jeux 14 de barre de parois isolantes, les risques d'arc électriques sont supprimés tout en respectant la compatibilité électromagnétique. De ce fait, les jeux 14 de barre peuvent très proches les uns des autres contrairement à l'art antérieur dans lequel une distance entre câbles doit être respectée pour éviter les problèmes d'arc électrique, distance qui pose problème en terme d'encombrement. Ainsi un canal 22 peut selon la forme de réalisation illustrée être au moins partiellement accolé au canal voisin. Selon une forme de réalisation particulière, une paroi 32 d'un canal peut être au moins partiellement mitoyenne, par exemple la paroi 32A sur la figure 2, avec une paroi du canal 22 voisin.

Dans les formes de réalisation des figures 2 et 3, les canaux 22 présentent au moins un coude 34 (c'est-à-dire un tournant) à savoir un endroit dans le canal où celui-ci prend une orientation différente permettant d'assurer le changement de direction entre le câble d'entrée et le câble de sortie.

Dans la forme de réalisation illustrée, la section des canaux 22 est légèrement supérieure à celle des jeux 14 de barre associés de manière que les parois 32 du canal enveloppent le jeu de barre associé et selon une forme particulière au plus près de ce dernier. Cependant du fait que le canal forme un ou plusieurs coudes 34 pour assurer le changement de direction, il est possible de laisser un jeu entre le jeu de barre et le canal, le jeu de barre ne pouvant s'échapper du canal du fait du ou desdits coudes.

Selon la forme de réalisation illustrée sur la figure 2, les canaux 22 à l'intérieur de la dite plaque 16 comprennent deux ou trois branches 23, 25, 27 rectilignes perpendiculaires l'une par rapport à l'autre, la liaison entre deux branches formant ledit coude 34. Les branches 23 sont dites des branches d'entrée. Les branches 25 sont dites des branches de sortie. Les branches 27 sont des branches d'entrée ou de sortie pour des canaux à deux branches et des branches centrales pour des canaux centraux. Les canaux 22 présentent d'un canal à l'autre des branches 27 longitudinales parallèles. Les dites branches parallèles peuvent être au moins partiellement contiguës, accolées ; elles peuvent dans ce cas comme vu plus haut avoir une paroi 32A au moins partiellement mitoyenne. Les canaux présentent d'un canal à l'autre des branches 23, 25 transversales parallèles. Les branches 23, 25 transversales sont les branches dans lesquelles les jeux de barre sont en connexion avec les câbles entrant et sortant. Elles ne peuvent donc pas être accolées pour permettre de maintenir une distance entre câbles à l'entrée de ladite plaque.

Dans la forme illustrée sur la figure 1, les canaux 22 se trouvant les plus proches des bords longitudinaux 18, 20 et transversaux 28, 30 de la plaque sont dit extrémaux 22A, 22B. Les canaux se trouvant entre les canaux extrémaux 22A, 22B sont dits centraux 22C. Les canaux extrémaux 22A, 22B présentent deux branches 23, 27 et 27, 25 perpendiculaires l'une à l'autre pour former un L. D'autres formes de réalisation pourraient être envisagées dans lesquelles par exemple les canaux extrémaux auraient trois branches. Les canaux centraux 22C présentent trois branches 23, 25, 27 perpendiculaires l'une à l'autre ; les branches 27 longitudinales centrales des canaux centraux 22C sont parallèles entre elles. Les branches 23, 25 transversales des canaux centraux 22C sont également parallèles entre elles. Les branches 23, 25 transversales des canaux extrémaux 22A, 22B sont parallèles entre elles et parallèles aux branches 23, 25 transversales des canaux centraux 22C et leurs branches 27 longitudinales sont également parallèles entre elles et parallèles aux branches 27 longitudinales des canaux centraux 22C. Ainsi les branches des canaux centraux et extrémaux orientées dans une direction longitudinale sont parallèles entre elles et celles orientées dans une direction transversale sont parallèles entre elles.

Dans la forme de réalisation de la figure 4, le canal 22 comporte une seule branche 21. Les branches 21 des canaux 22 peuvent être parallèles comme non parallèles entre elles. Une partie seulement des dites branches 21 peuvent aussi selon une autre forme de réalisation être parallèles entre elles. Dans la forme illustrée sur la figure 4, les branches 21 ne sont pas parallèles entre elles.

Dans la forme illustrée sur les figures 2 à 4, la plaque 16 correspond à un parallélépipède rectangle. De cette manière, dans les formes de réalisation des figures 2 et 3, les branches des canaux extrémaux 22A, 22B et centraux 22C, transversales et longitudinales sont parallèles respectivement aux côtés transversaux ou aux côtés longitudinaux de la plaque. Elles suivent respectivement des directions transversales ou longitudinales. Ainsi, dans la forme de réalisation de la figure 2, les branches transversales ou longitudinales des canaux extrémaux 22A, 22B peuvent longer respectivement les bords transversaux 28, 30 ou longitudinaux 18, 20 de la plaque pour optimiser la taille de la plaque, de manière que les dimensions de la plaque soient les plus faibles possibles pour réduire au minimum l'espace pris par celle-ci. Cependant de l'espace E peut également être prévu entre les bords transversaux 28, 30 de la plaque et la branche 23 transversale des canaux extrémaux 22A, 22B comme illustré sur la figure 3.

Dans les formes illustrées sur les figures 2 à 4, les canaux sont parallélépipédiques de section rectangulaire pour recevoir des jeux de barre plate. La section du canal est légèrement supérieure à la section du jeu de barres associé de manière que le jeu de barre soit enveloppé par le canal comme vu plus haut.

La plaque 16 est au moins partiellement rigide par opposition aux câbles qui sont flexibles à savoir qu'elle ne peut pas se déformer comme les câbles. De cette manière elle est facilement manipulable. Selon une forme de réalisation, la plaque est globalement rigide. Les parois 32 des canaux 22 de la plaque sont constituées d'un matériau isolant. Elles pourraient aussi être revêtues d'un matériau ou d'un dispositif isolant électriquement permettant d'isoler les canaux les uns des autres. Selon une forme de réalisation, l'ensemble de la plaque est constituée au moins partiellement et dans la forme de réalisation en grande majorité d'un matériau isolant. Des zones de reprise de métallisation localisées à proximité des extrémités 24, 26 sont par exemple prévues. La plaque peut être par exemple pleine en matériau isolant dans laquelle sont prévus des canaux. Elle peut aussi comporter des parties creuses en plus des canaux. Elle peut être réalisée en impression 3D, par usinage, moulage et/ou toute autre technologie. Elle pourrait selon d'autres formes de réalisation être composée de plusieurs matériaux. Selon une forme de réalisation particulière, il est possible de recouvrir la plaque d'une couche de blindage pour parfaire l'isolation. Les figures représentant la plaque par transparence, cette couche recouvre la plaque mais n'est pas visible.

La plaque 16 est un dispositif de liaison d'un ensemble électrique. L'ensemble électrique comprend des câbles 4 au moins quatre ainsi que la plaque 16. La plaque 16 permet de lier des câbles 4 deux à deux qui ne se trouvent pas dans le même alignement et qui nécessiteraient sans le dispositif de liaison électrique présenté ici de tordre l'un, l'autre ou les deux pour les joindre. L'extrémité des câbles entrants doit être liée à l'extrémité des câbles sortants ne se trouvant pas dans le même alignement. Pour ce faire, l'extrémité des câbles entrants est fixée respectivement au niveau d'une extrémité débouchante 24 d'un canal 22 se trouvant au niveau d'un bord 18 de la plaque et l'extrémité des câbles sortants est fixée respectivement au niveau d'une extrémité débouchante 26 d'un canal 22 se trouvant au niveau d'un autre bord 20 de la plaque, celle associée par le canal à l'extrémité débouchante duquel le câble entrant doit être associé au câble sortant.

Les extrémités des câbles sont serties à l'intérieur des extrémités débouchantes des canaux. Mais d'autres types de fixation sont possibles comme le soudage ou autre.

Grâce à la plaque 16, la distance entre câbles 4 est respectée, les liaisons électriques assurant un changement de direction protégées de toute détérioration tout en réduisant l'espace alloué à la plaque en comparaison de celui qui aurait été nécessaire sans le dispositif 12 de liaison décrit.

## Revendications

1. Dispositif de liaison électrique (12) entre câbles (4) comprenant au moins deux jeux (14) de barres, **caractérisé en ce qu'**il comprend une plaque (16) présentant au moins deux canaux (22) intérieurs indépendants dans lesquels se trouvent lesdits jeux (14) de barre, chaque canal (22) étant isolé électriquement des autres canaux, lesdits jeux (14) de barre assurant une conduction électrique d'une extrémité (24) débouchante d'un canal à l'autre extrémité (26).

2. Dispositif selon la revendication 1, **caractérisé en ce que** les jeux de barre (14) sont isolés électriquement d'un canal (22) à l'autre.

3. Dispositif selon l'une des revendications 1 ou 2, **caractérisé en ce que** les extrémités d'entrée (24) et de sortie (26) d'un même canal sont décalées transversalement.

4. Dispositif selon l'une des revendications 1 à 3, **caractérisé en ce que** la plaque (16) est au moins partiellement rigide.

5. Dispositif de liaison électrique selon l'une des revendications 1 à 4, **caractérisé en ce que** les canaux (22) comprennent un ou plusieurs coudes (34) divisant les canaux en plusieurs branches (23, 25, 27) s'étendant selon des directions différentes.

6. Dispositif de liaison électrique selon l'une des revendications 1 à 5, **caractérisé en ce que** la plaque (16) est parallélépipédique de section rectangulaire.

7. Dispositif de liaison électrique selon l'une des revendications 1 à 6, **caractérisé en ce que** les canaux sont parallélépipédiques de section rectangulaire légèrement supérieure à celle du jeu de barres associé de manière que le jeu de barre soit enveloppé par le canal.

8. Dispositif de liaison électrique selon l'une des revendications 1 à 7, **caractérisé en ce qu'**une paroi (32A) d'un canal peut être au moins partiellement mitoyenne avec une paroi d'un autre canal.

9. Ensemble électrique comprenant au moins quatre câbles (4) et un dispositif de liaison (12) selon l'une des revendications 1 à 8 précédentes, l'extrémité de câbles (4) dits entrants dans le dispositif de liaison devant être liés à l'extrémité de câbles dits sortants ne se trouvant pas dans le même alignement, **caractérisé en ce que** l'extrémité des câbles entrants est fixée respectivement au niveau d'une extrémité débouchante (24) d'un canal se trouvant au niveau d'un bord (18) de la plaque et l'extrémité des câbles sortants est fixée respectivement au niveau d'une extrémité débouchante (26) d'un canal se trouvant au niveau d'un autre bord (20) de la plaque, les câbles à associer étant liés par un même canal (22).

10. Ensemble électrique selon la revendication 9, **caractérisé en ce que** les extrémités des câbles (4) sont serties à l'intérieur des extrémités débouchantes (24, 26) des canaux (22).
